# FASCICULE DE BREVET EUROPEEN

(11) **EP 1 645 021 B1**
(45) Date de publication et mention de la délivrance du brevet: **29.08.2007**
(21) Numéro de dépôt: 04741949.4
(22) Date de dépôt: 02.07.2004
(51) Int. Cl.: H02K 9/197

(54) **REFROIDISSEMENT D'UN STATOR**
KÜHLUNG EINES STATORS
COOLING OF A STATOR

(30) Priorité: 11.07.2003 FR 0308559
(43) Date de publication de la demande: 12.04.2006
(73) Titulaire: Thales, 92526 Neuilly Sur Seine (FR)
(72) Inventeur: BIAIS, François Thales Intellectual Property, F-94117 Arcueil (FR)
(74) Mandataire: Collet, Alain
(86) Numéro de dépôt international: PCT/EP2004/051337
(87) Numéro de publication internationale: WO 2005/015710

(56) Documents cités:
- GB-A- 2 145 882
- US-A- 4 908 347
- US-A- 5 519 269
- US-A- 5 670 838

## Description

L'invention se rapporte au refroidissement d'un stator d'une machine électrique, le stator comportant un circuit de refroidissement autonome c'est à dire distinct d'autre circuit de refroidissement comme par exemple, celui d'un rotor de la machine électrique. L'invention est particulièrement adaptée au refroidissement d'une machine électrique fonctionnant à haute température et refroidie par une circulation d'huile. La température de l'huile est par exemple comprise entre 100 et 140 °C. L'étanchéité du circuit de refroidissement doit être assurée entre le stator immergé dans l'huile et l'ensemble rotor au niveau d'un entrefer séparant le rotor du stator.

On a réalisé l'étanchéité du circuit de refroidissement au moyen d'une coque étanche solidaire du stator et disposée dans l'entrefer. Ce type de réalisation engendre de nombreuses contraintes. La coque, située dans l'entrefer, doit impérativement être non-conductrice de l'électricité afin de ne pas produire des pertes qui seraient rédhibitoires. Elle doit être aussi mince que possible, car soit elle constitue un entrefer électromagnétique supplémentaire (si elle est amagnétique), soit elle augmente les fuites magnétiques (si elle est magnétique). Elle doit enfin assurer l'étanchéité à l'huile sur toute la longueur de la machine. Sa face externe est exposée à la température relativement basse de l'huile circulant dans le stator, mais sa face interne est exposée à la température élevée de l'air présent dans l'entrefer. La coque doit avoir des caractéristiques mécaniques suffisantes pour résister à ce gradient de température important et également pour conserver ses dimensions et ne pas se déformer dans l'entrefer. L'ensemble de ces contraintes peut se résumer à la réalisation d'une coque cylindrique mince et étanche, utilisant un matériau non-conducteur de l'électricité, et capable de résister à ces températures élevées sans se déformer.

Une machine électrique ayant un stator selon le préambule de la revendication 1 est décrite dans US-A- 5 670 838.

L'invention a pour but de simplifier la réalisation de la coque en éliminant un grand nombre des contraintes mentionnées plus haut. A cet effet l'invention a pour objet un stator d'une machine électrique comportant un circuit de refroidissement autonome, des moyens d'étanchéité du circuit de refroidissement par rapport à un rotor de la machine électrique, un circuit magnétique comportant des encoches, un bobinage disposé dans les encoches, caractérisé en ce que les moyens d'étanchéité comprennent une coque étanche et en ce que le stator comporte un circuit magnétique en deux parties séparées par la coque.

L'invention trouve une utilité particulière pour des machines électriques nécessitant une inductance de fuite élevée. Par exemple; lorsque la machine est un alternateur, l'inductance de fuite permet de réduire le courant de court circuit en cas de défaut. Pour augmenter l'inductance de fuite, on réalise des encoches plus profondes que ne nécessite le remplissage du bobinage dans les encoches. La coque peut alors être positionnée en sandwich, à l'intérieur du circuit magnétique et la totalité du bobinage peut néanmoins être disposée à l'extérieur de la coque et donc être refroidie par le circuit de refroidissement.

L'invention sera mieux comprise et d'autres avantages apparaîtront à la lecture de la description détaillée d'un mode de réalisation de l'invention donné à titre d'exemple, description illustrée par le dessin joint dans lequel:
la figure 1 représente, en coupe partielle, une machine électrique comprenant un stator conforme à l'invention ;
la figure 2 représente un secteur angulaire du stator de la figure 1, en coupe par un plan perpendiculaire au plan de coupe de la figure 1.

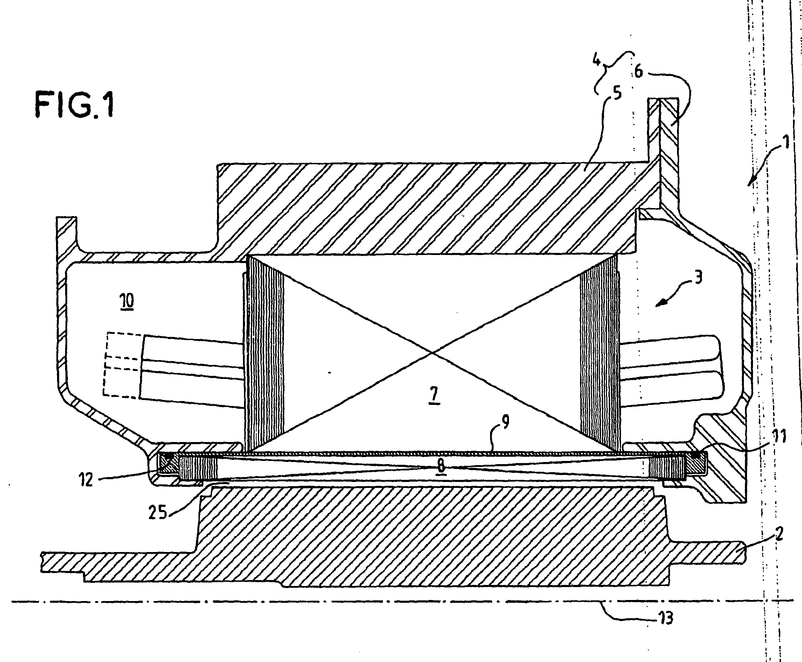

La figure 1 représente une machine électrique 1 comportant un rotor 2 dont les détails ne sont pas représentés, ainsi qu'un stator 3 fixé à l'intérieur d'une carcasse 4 formée de deux pièces 5 et 6. Le rotor 2 et le stator 3 sont séparés par un entrefer 25. Le stator 3 comporte un circuit magnétique en deux parties 7 et 8 séparées par une coque 9. Ainsi la coque 9 est placée en sandwich dans le circuit magnétique. La carcasse 4 et la coque 9 forment une enceinte étanche 10 à l'intérieure de laquelle circule un fluide assurant le refroidissement du stator 3. On utilise par exemple de l'huile comme fluide de refroidissement. On peut placer un ou plusieurs joints toriques entre la carcasse 4 et la coque 9 pour améliorer l'étanchéité au niveau de l'interface entre la coque 9 et la carcasse 4. Dans l'exemple représenté, deux joints 11 et 12 ont été mis en oeuvre.

Avantageusement, la coque 9 est de forme tubulaire et est centrée autour d'un axe 13 de révolution de la machine électrique et le circuit magnétique comporte un premier empilage de tôles 7 réalisé à l'extérieur de la coque 9 et un second empilage de tôles 8 réalisé à l'intérieur de la coque 9. Les tôles 7 et 8 sont planes et perpendiculaires au plan de la figure 1.

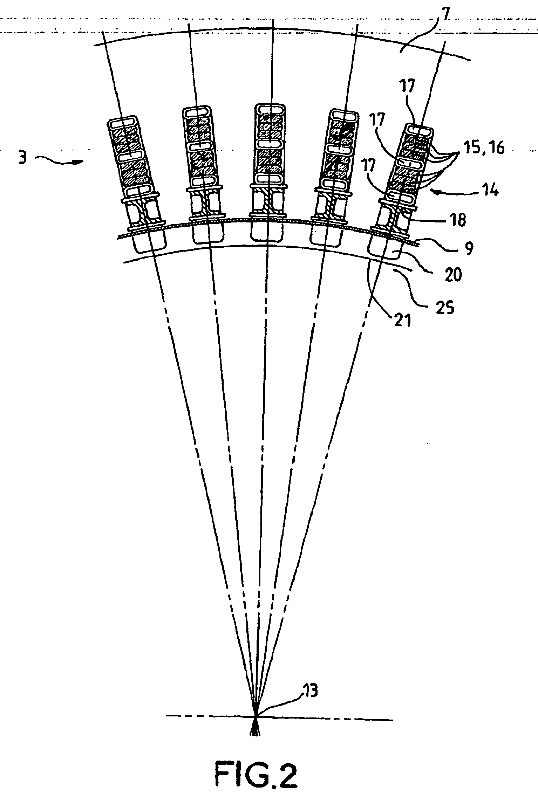

La figure 2 représente en coupe un secteur angulaire du stator 3 par un plan perpendiculaire à l'axe 13. Pour avoir une vision complète du stator 3, on duplique le secteur angulaire autour de l'axe 13.

Le premier empilage de tôles 7 comporte des encoches 14 à l'intérieur desquelles un bobinage 15 est disposé. Le bobinage 15 est par exemple formé de barres de cuivre 16 de section rectangulaire. Les encoches 14 sont avantageusement de largeur constante correspondant à la section des barres 16. Avantageusement, des canaux 17 sont ménagés entre les barres 16. Le fluide de refroidissement circule dans les canaux 17 afin de refroidir le bobinage 15 et l'ensemble du stator 3. Le bobinage est disposé au fond des encoches 14. On peut compléter le remplissage de chaque encoche 14 en disposant une cale 18 réalisé dans un matériau isolant telle qu'une résine chargée de fibres de verre. La cale 18 comporte avantageusement des canaux 17 afin d'améliorer le refroidissement du stator 3.

La coque 9 est disposée entre le premier empilage de tôles 7 et le second empilage de tôles 8. Ainsi la coque 9 n'est plus directement exposée à l'air de l'entrefer 25 et à sa température élevée comme dans l'art antérieur décrit plus haut.

Le second empilage de tôles 8 comporte également des encoches 20 disposées dans le prolongement des encoches 14 du premier empilage de tôles 7. Avantageusement le second empilage de tôles 8 comporte des ponts 21 assurant la fermeture des encoches 20, les ponts 21 étant situés au voisinage immédiat de l'entrefer 25.

La fermeture des encoches 20 par les ponts 21 constitue une alternative directe et simple à la mise en place de cales magnétiques dans des encoches droites et ouvertes. Ces cales auraient dû de toute façon être prévues pour notamment diminuer fortement les pertes en surface du rotor 3, pertes importantes dans le cas d'une frette massive. Les ponts 21 sont directement réalisés avec les tôles du second empilage de tôles 8. Ceci évite d'éventuels défauts de contact entre des tôles réalisant des encoches ouvertes et des cales magnétiques rapportées pour fermer les encoches.

Le second empilage de tôles 8 peut servir de support mécanique à la coque 9. Ceci permet l'utilisation de matériaux n'ayant pas les caractéristiques mécaniques d'une coque de l'art antérieur. Par exemple, il n'est pas nécessaire que la coque 9 soit autoporteuse. On peut par exemple utiliser un simple revêtement étanche pour former la coque 9. Le revêtement est déposé sur l'un des empilages de tôles 7 ou 8. On utilise, par exemple, un matériau composite comportant des fibres de verre noyées dans de la résine pour réaliser le revêtement.

La position de la coque 9 par rapport à la profondeur cumulée des encoches 14 et 20 peut être ajustée en fonction des différentes contraintes de réalisation, et ce dans une plage correspondant à la hauteur de la partie non remplie de cuivre du stator 3.

## Revendications

1. Stator (3) d'une machine électrique (1) comportant un circuit de refroidissement autonome, des moyens d'étanchéité du circuit de refroidissement par rapport à un rotor (2) de la machine électrique (1), un circuit magnétique comportant des encoches (14, 20), un bobinage (15) disposé dans les encoches (14, 20), **caractérisé en ce que** les moyens d'étanchéité comprennent une coque (9) étanche et **en ce que** le stator (3) comporte un circuit magnétique en deux parties (7, 8) séparées par la coque (9).

2. Stator selon la revendication 1, **caractérisé en ce que** la coque (9) est de forme tubulaire et est centrée autour d'un axe (13) de révolution de la machine électrique.

3. Stator selon l'une des revendications 1 ou 2, **caractérisé en ce que** le circuit magnétique comporte un premier empilage de tôles (7) réalisé à l'extérieur de la coque (9) et un second empilage de tôles (8) réalisé à l'intérieur de la coque (9).

4. Stator selon la revendication 3, **caractérisé en ce que** le premier et le second empilage de tôles (7, 8) comportent des encoches et **en ce que** les encoches (20) du second empilage de tôles (8) sont disposées dans le prolongement des encoches (14) du premier empilage de tôles (7).

5. Stator selon la revendication 4, **caractérisé en ce que** le bobinage (15) est complètement situé dans les encoches (14) du premier empilage de tôles (7).

6. Stator selon l'une quelconque des revendications 4 ou 5, **caractérisé en ce que** le second empilage de tôles (8) comporte des ponts (21), assurant la fermeture des encoches (20) du second empilage de tôles (8), les ponts (21) étant situés au voisinage immédiat d'un entrefer (25) de la machine électrique.

7. Stator selon l'une des revendications précédentes, **caractérisé en ce que** la coque (9) est formée par un revêtement de l'un des empilages de tôles (7 ou 8).

## Claims

1. Stator (3) of an electric machine (1) comprising an autonomous cooling circuit, means for sealing the cooling circuit with respect to a rotor (2) of the electric machine (1), a magnetic circuit comprising slots (14, 20), and a winding (15) arranged in the slots (14, 20), **characterized in that** the sealing means comprise a fluidtight shell (9) and **in that** the stator (3) comprises a two-part magnetic circuit whose two parts (7, 8) are separated by the shell (9).

2. Stator according to Claim 1, **characterized in that** the shell (9) is of tubular shape and is centred around an axis (13) of revolution of the electric machine.

3. Stator according to either of Claims 1 and 2, **characterized in that** the magnetic circuit comprises a first stack of laminations (7) produced outside the shell (9) and a second stack of laminations (8) produced inside the shell (9).

4. Stator according to Claim 3, **characterized in that** the first and the second stacks of laminations (7, 8) comprise slots and **in that** the slots (20) of the second stack of laminations (8) are arranged in the continuation of the slots (14) of the first stack of laminations (7).

5. Stator according to Claim 4, **characterized in that** the winding (15) is completely situated in the slots (14) of the first stack of laminations (7).

6. Stator according to either one of Claims 4 and 5, **characterized in that** the second stack of laminations (8) comprises bridges (21) which close the slots (20) of the second stack of laminations (8), the bridges (21) being situated in the immediate vicinity of a gap (25) of the electric machine.

7. Stator according to one of the preceding claims, **characterized in that** the shell (9) is formed by a coating of one of the stacks of laminations (7 or 8).

## Patentansprüche

1. Stator (3) einer elektrischen Maschine (1), aufweisend einen eigenständigen Kühlungskreislauf, Dichtmittel des Kühlungskreislaufs in Bezug auf einen Rotor (2) der elektrischen Maschine (1), einen Magnetkreis, der Nuten (14, 20) aufweist, eine Wicklung (15), die in den Nuten (14, 20) angeordnet ist, **dadurch gekennzeichnet, dass** die Dichtmittel eine dichte Schale (9) aufweisen und dass der Stator (3) einen Magnetkreis aus zwei Teilen (7, 8), die durch die Schale (9) getrennt sind, aufweist.

2. Stator nach Anspruch 1, **dadurch gekennzeichnet, dass** die Schale (9) röhrenförmig ist und um eine Drehachse (13) der elektrischen Maschine herum zentriert ist.

3. Stator nach Anspruch 1 oder 2, **dadurch gekennzeichnet, dass** der Magnetkreis ein erstes Blechpaket (7), das außen an der Schale (9) ausgeführt ist, und ein zweites Blechpaket (8), das im Inneren der Schale (9) ausgeführt ist, aufweist.

4. Stator nach Anspruch 3, **dadurch gekennzeichnet, dass** das erste und das zweite Blechpaket (7, 8) Nuten aufweisen und dass die Nuten (20) des zweiten Blechpakets (8) in der Verlängerung der Nuten (14) des ersten Blechpakets (7) angeordnet sind.

5. Stator nach Anspruch 4, **dadurch gekennzeichnet, dass** die Wicklung (15) sich vollständig in den Nuten (14) des ersten Blechpakets (7) befindet.

6. Stator nach einem der Ansprüche 4 oder 5, **dadurch gekennzeichnet, dass** das zweite Blechpaket (8) Brücken (21) aufweist, die die Schließung der Nuten (20) des zweiten Blechpakets (8) gewährleisten, wobei sich die Brücken (21) in unmittelbarer Nähe einer Luftspalte (25) der elektrischen Maschine befinden.

7. Stator nach einem der vorhergehenden Ansprüche, **dadurch gekennzeichnet, dass** die Schale (9) durch eine Verkleidung eines der Blechpakete (7 oder 8) gebildet ist.
